# EUROPÄISCHE PATENTSCHRIFT

(11) **EP 2 785 620 B1**
(45) Veröffentlichungstag und Bekanntmachung des Hinweises auf die Patenterteilung: **08.11.2017**
(21) Anmeldenummer: 12756705.5
(22) Anmeldetag: 05.09.2012
(51) Int. Cl.: B65G 21/20, B65G 47/244

(54) **VERFAHREN UND VORRICHTUNG ZUM DREHEN EINES STAPELS**
METHOD AND APPARATUS FOR ROTATING A STACK
PROCÉDÉ ET APPAREIL POUR FAIRE PIVOTER UNE PILE

(30) Priorität: 01.12.2011 DE 102011087529
(43) Veröffentlichungstag der Anmeldung: 08.10.2014
(73) Patentinhaber: Dücker Fördertechnik GmbH, 40476 Langenfeld (DE)
(72) Erfinder: STEHR, Roland, 40764 Langenfeld (DE)
(74) Vertreter: Greif, Thomas
(86) Internationale Anmeldenummer: PCT/EP2012/067325
(87) Internationale Veröffentlichungsnummer: WO 2013/079233

(56) Entgegenhaltungen:
- EP-A1- 0 486 043
- EP-A1- 0 568 735
- EP-A1- 2 060 514
- EP-B1- 1 345 827
- DE-U1- 20 319 973

## Beschreibung

Die Erfindung betrifft ein Verfahren und eine Vorrichtung zum Drehen eines Stapels um eine senkrecht zur Förderebene verlaufende, insbesondere vertikale, Drehachse, während der Stapel auf einer Fördervorrichtung mit ebener Förderfläche aufliegt.
Bekannterweise werden Stapel blatt- oder plattenförmiger Gütern mit Fördereinrichtungen gefördert, deren Förderelemente in einer im Wesentlichen ebenen Förderfläche angeordnet sind. Derartige Fördereinrichtungen sind Band-, Gliederketten-, Gliederband- oder Modulkettenförderer. Dabei liegen die Stapel während des Förderns auf der Förderfläche auf.
Innerhalb der Förderstrecke ist es häufig erforderlich, einen Stapel um einen bestimmten Winkel, insbesondere um einen Winkel von 90 Grad um seine Hochachse zu drehen, bevor er weitergefördert wird. Zum Drehen von auf einer Transporteinrichtung aufliegenden Transportgutes sind Vorrichtungen bekannt, bei denen zwischen einem angetriebenen Zuförderer und Abförderer ein Drehförderer angeordnet ist. Der Drehförderer weist mindestens zwei parallel zueinander laufende Transporteinrichtungen auf, deren Geschwindigkeit und/oder Laufrichtung unabhängig voneinander steuer- bzw. regelbar sind. Die Auflagefläche des Drehförderers ist konvex gewölbt.

EP 0 568 735 A1 zeigt eine bekannte Vorrichtung zum Drehen von Gegenstände. Der Erfindung liegt die Aufgabe zugrunde, ein Verfahren und eine Vorrichtung zum Drehen eines Stapels um eine senkrecht zur Förderebene verlaufende, insbesondere vertikale, Achse bereitzustellen, das (die) konstruktiv einfach zu realisieren ist und die einen Stapel sicher dreht.
Diese Aufgabe wird mit den Merkmalen des Patentanspruchs 1 bzw. des Patentanspruchs 6 gelöst.
Nach der Erfindung wird an der Unterseite eines Stapels an einem Längsrand eine punktuelle Rückhaltekraft einwirken gelassen, die bei einem Weitertransport nach Art eines Momentanpols eine Drehung des Stapels um diesen Momentanpol bewirkt. Die Kraft für die Drehbewegung wird durch die Fördereinrichtung selbst bewirkt.
Die Drehwirkung lässt sich verstärken, wenn der Stapel an der Längsseite, an der er zurückgehalten wird, zugleich angehoben wird. Dadurch wird an der zurückgehaltenen Längsseite eine verringerte Reibungskraft zwischen der Förderfläche und der Stapelunterseite erzeugt.
Bevorzugt wird die Rückhaltekraft dadurch verstärkt, dass die Stapelunterseite an der Rückhaltestelle angesaugt wird. Die Saugkraft hält den Stapel beim Drehen fest, so dass er sich nicht auf der Förderfläche versetzt. Dazu ist die von der Saugkraft bewirkte Rückhaltekraft am Drehpunkt größer als die vom Förderer auf die Stapelunterseite aufgebrachte Reibungskraft.
Zusätzlich lässt sich die Drehwirkung dadurch verbessern, dass der Stapel nicht nur an dem Rückhaltepunkt, sondern auch in dem Bereich vor dem Rückhaltepunkt angehoben wird. Damit durch das Anheben keine die Drehbewegung behindernden Kräfte auftreten, erfolgt das Anheben bevorzugt mittels Rollen, die mit sich in Förderrichtung erstreckenden Drehachsen frei drehbar gelagert sind.

Um eine sichere Drehung über einen großen Winkelbereich zu erreichen, baut sich bevorzugt die Förderfläche im Drehbereich aus zwei sich parallel in Förderrichtung erstreckenden und getrennt vorwärts und rückwärts steuerbaren Förderstrecken auf. Zur Bestimmung und Steuerung des Drehwinkels ist an der Rückhaltevorrichtung eine Winkelmessvorrichtung angebracht.
Nachfolgend wird die Erfindung anhand eines bevorzugten Ausführungsbeispiels näher erläutert.

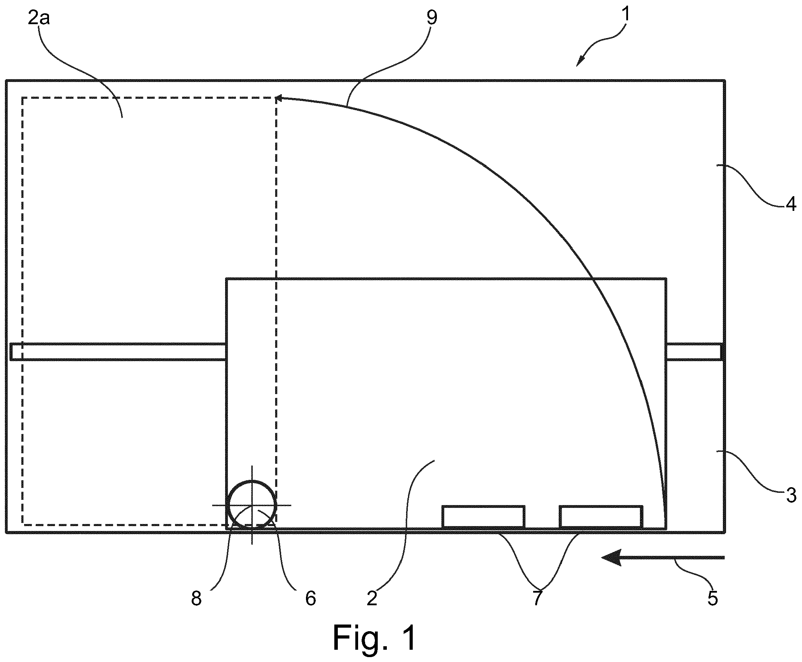

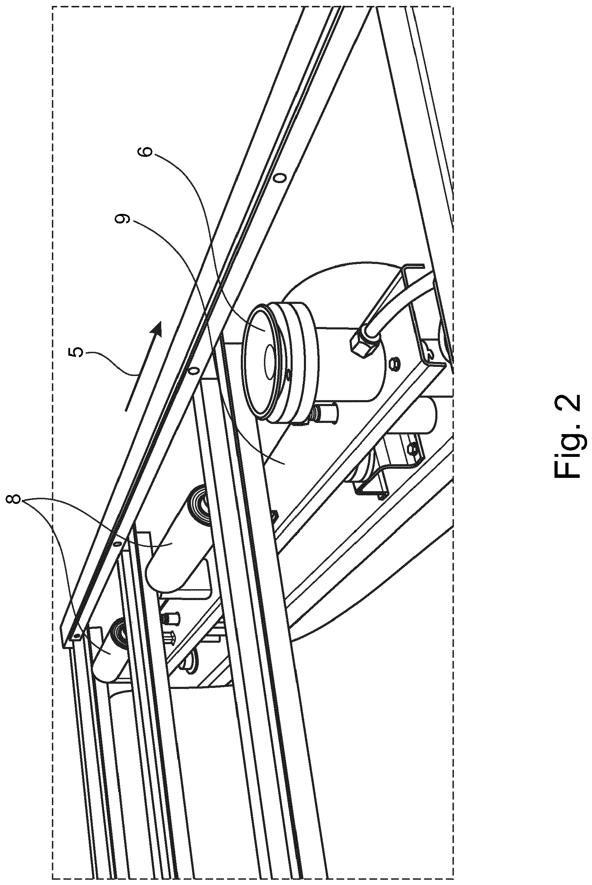

Figur 1 zeigt als Skizze in einer Draufsicht auf die Förderfläche das Prinzip der Erfindung.
Die Drehvorrichtung ist in eine Fördereinrichtung 1 für Stapel 2, beispielsweise aus Wellstoffbögen, integriert und dient zum Drehen der Stapel um eine zur Förderebene senkrechte Achse. Bei ebener Förderfläche verläuft die Drehachse vertikal. Die Fördereinrichtung 1 enthält eine ebene Förderfläche 3, 4, die von dem oberen Trum von zumindest einem angetriebenen Gliederband gebildet wird. Bevorzugt werden Gliederbänder mit einem relativ geringen Reibbeiwert benutzt. Alternativ können auch Band-, Gliederketten oder Modulkettenförderer verwendet werden, die eine ebene Förderfläche aufweisen, auf denen die Stapel 2 aufliegen.
Bevorzugt enthält die Fördereinrichtung 1 zwei sich parallel in Förderrichtung (Pfeil 5) erstreckende und nebeneinander angeordnete Förderstrecken. Die Förderflächen 2, 3 der beiden Förderstrecken sind getrennt vorwärts und rückwärts steuerbar. Sie weisen dazu jeweils eigene Antriebe auf.

An einer äußeren Längsseite, bevorzugt neben dem Längsrand der Förderstrecke 3, ist eine Rückhaltevorrichtung 6 angeordnet. Sie ermöglicht es, gegen die Unterseite des Stapels 2 eine entgegen der Förderrichtung 5 und punktuell wirkende Rückhaltekraft zu erzeugen. Bevorzugt ist die Rückhaltevorrichtung 6 als Drehteller gestaltet, der aus einem Bereich unterhalb der Förderfläche bis in einem Bereich oberhalb der Förderfläche heb- und senkbar gelagert ist. Dies ermöglicht es, den Stapel 2 etwas anzuheben, um den Vortrieb des Förderers 3 zu verringern.

Zur Verstärkung der Rückhaltekraft wird die Stapelunterseite beim Drehen an der Rückhaltestelle angesaugt. Dazu enthält die Rückhaltevorrichtung 6 eine Saugeinrichtung, von der die Saugkraft erzeugt wird. Im Ausführungsbeispiel enthält der heb- und senkbare Drehteller eine Öffnung, die über eine Unterdruckleitung an eine Unterdruckquelle angeschlossen ist.

Zur Einleitung und/oder Verstärkung der Drehbewegung ist an der Längsseite mit der Rückhaltevorrichtung 6, bevorzugt neben dem Rand der Förderfläche 3 und in Transportrichtung vor der Rückhaltevorrichtung 6 eine zusätzliche Hebevorrichtung angeordnet. Die Hebevorrichtung ermöglicht es, den Stapel 2 an seiner zugeordneten Längsseite anzuheben. Durch das Anheben an der Längsseite wird die Reibungskraft zur Förderfläche 3 verringert. Dies verringert zugleich die Vortriebskraft in Förderrichtung 5 in dieser Ebene, verlagert den Auflagepunkt des Stapels weiter zur Mitte hin und vergrößert dadurch den Reibradius. Dadurch wird das Drehmoment für die Drehung erhöht.

Bevorzug enthält die zusätzliche Hebevorrichtung zumindest eine Querrolle 7, die mit sich in Förderrichtung 5 erstreckender Drehachse frei drehbar und heb- und senkbar hingestellt der Fördervorrichtung gelagert ist. Im Ausführungsbeispiel nach Figur 1 sind zwei Rollen 7 mit fluchtenden Drehachsen hintereinander angeordnet. Zur Bestimmung des Drehwinkels des Stapels 2 enthält die Vorrichtung eine Winkelmesseinrichtung. Die Winkelmesseinrichtung ist bevorzugt mit der Rückhaltevorrichtung 6 verbunden. Im vorliegenden Beispiel misst sie die Winkelstellung des Drehtellers und dient dazu, die Drehbewegung des Stapels 2 zu steuern oder zu regeln.

Zur Drehung eines Stapels 2 wird dieser mittels der Fördereinrichtung 1 in eine Position gefördert, bei der er an einer Längsseite und im vorderen Bereich oberhalb der Rückhaltevorrichtung 6 steht. Bevorzugt steht - wie in Figur 1 dargestellt - eine der vorderen Ecken des Stapels 2 oberhalb der Rückhaltevorrichtung 6. In dieser Position wird der Förderer 1 angehalten. Anschließend wird die als Drehteller gestaltete Rückhaltevorrichtung bis etwas oberhalb der Förderfläche 3 angehoben und drückt dabei die auf ihr liegende Stapelunterseite in diesem Bereich nach oben. Gleichzeitig wird die Saugluft eingeschaltet und somit die Stapelunterseite an den Drehteller angesaugt. Diese Maßnahmen bewirken eine der Förderrichtung 5 entgegen wirkende Rückhaltekraft an der Position der Rückhaltevorrichtung 6. Zusätzlich werden die beiden Querrollen 7 angehoben, um die Reibung der Stapelunterseite in ihrem Bereich zur Förderfläche 3 zu verringern.

Zusätzlich wird der Stapel 2 an seiner Längsseite von den frei drehbar gelagerten Rollen 7 angehoben. Die Rollen 7 setzen aufgrund ihrer Anordnung einer seitlichen Bewegung senkrecht zur Förderrichtung 5 nur sehr geringe Reibungskräfte entgegen, da sie in diese Richtung frei drehen können. Der Förderung in Transportrichtung 5 setzen sie erhebliche Reibungskräfte entgegen, da die Stapelunterseite in axialer Richtung über die Rollen 7 geschoben werden müssen. Die unterschiedlichen Reibungskräfte unterstützen das Einleiten der Drehbewegung entlang des Pfeils 9.

Anschließend wird der Förderer 3 wieder eingeschaltet. Aufgrund der Rückhaltekraft an der Position der Rückhaltevorrichtung 6 und der verringerten Reibung an der Längsseite der Stapelunterseite wird ein Drehmoment auf den Stapel 2 erzeugt, der eine Drehung um den Drehpunkt 8 an der Rückhaltevorrichtung 6 in Richtung des Pfeils 9 erzeugt. Beim Drehen erhöht sich die Haltekraft am Drehpunkt 8 mit zunehmendem Drehwinkel. Zugleich nehmen die Vortriebskräfte zu und die in seitliche Richtung wirkenden Kräfte ab, da sich die für den Vortrieb wirksame Auflagefläche auf dem Förderer 1 vergrößert.

Um bei zunehmendem Vortriebskräften den Stapel weiter am Drehpunkt 8 zu halten, kann die Förderstrecke 3 ab einem gewissen Drehwinkel mit verminderter Geschwindigkeit betrieben oder sogar angehalten werden. Die Drehung wird dann vollständig oder überwiegend durch die zweite Förderstrecke 4 bewirkt bis der Stapel 2 die um 90 Grad gedrehte Position 2a erreicht hat.

## Patentansprüche

1. Verfahren zum Drehen eines auf einer Förderfläche aufliegenden Stapels (2) um eine zur Förderebene senkrechte Achse, wobei an einer Längsseite und in Förderrichtung im vorderen Bereich gegen die Unterseite des Stapels (2) eine der Förderrichtung (5) entgegenwirkende Rückhaltekraft punktuell einwirken gelassen wird, die bei einem Weitertransport des Stapels (2) eine Drehbewegung bewirkt, und während der Wirkung der Rückhaltekraft der Stapel (2) an der Längsseite angehoben wird, an der auch die Rückhaltekraft einwirkt, **dadurch gekennzeichnet, dass** eine Winkelstellung während der Drehbewegung des Stapels (2) mittels einer Winkelmesseinrichtung gemessen wird.

2. Verfahren nach Anspruch 1, **dadurch gekennzeichnet, dass** die Stapelunterseite an der Rückhaltestelle angesaugt wird.

3. Verfahren nach einen der Ansprüche 1 bis 2, **dadurch gekennzeichnet, dass** das Anheben des Stapels (2) an der Längsseite mittels Querrollen (7) erfolgt, die mit sich in Förderrichtung (5) erstreckender Drehachse frei drehbar und heb- und senkbar gelagert sind.

4. Verfahren nach einem der Ansprüche 1 bis 3, **dadurch gekennzeichnet, dass** die Fördereinrichtung (1) im Drehbereich zwei sich parallel in Förderrichtung erstrechende und getrennt vorwärts und rückwärts steuerbare Förderstrecken (3, 4) aufweist, um die Drehung zu beeinflussen.

5. Verfahren nach einem der Ansprüche 1 bis 4, **dadurch gekennzeichnet, dass** im Drehpunkt (8) der Drehwinkel des Stapels (2) kontinuierlich gemessen wird.

6. Vorrichtung zur Durchführung eines Verfahrens nach einem der Ansprüche 1 bis 5 mit einer Fördereinrichtung (1), die eine Förderfläche aufweist, auf der der Stapel (2) beim Transport aufliegt, wobei an einer Längsseite eine gegen die Unterseite des Stapels (2) bewegbare Rückhaltevorrichtung (6) angeordnet ist, die in aktiver Position bei einem Weitertransport des Stapels (2) eine Drehbewegung bewirkt, und dass an der Längsseite mit der Rückhaltevorrichtung (6) in Transportrichtung vor dieser eine Hebevorrichtung zum Anheben des Stapels (2) an seiner Längsseite angeordnet ist, **dadurch gekennzeichnet, dass** eine Winkelmesseinrichtung vorgesehen ist, um eine Winkelstellung während der Drehbewegung des Stapels (2) zu erfassen.

7. Vorrichtung nach Anspruch 6, **dadurch gekennzeichnet, dass** die Hebevorrichtung zumindest eine Querrolle (7) enthält, die mit sich in Förderrichtung (5) erstreckender Drehachse frei drehbar und heb- und senkbar gelagert ist.

8. Vorrichtung nach einem der Ansprüche 6 bis 7, **dadurch gekennzeichnet, dass** die Rückhaltevorrichtung (6) einen heb- und senkbar gelagerten Drehteller enthält.

9. Vorrichtung nach einem der Ansprüche 6 bis 8, **dadurch gekennzeichnet, dass** die Rückhaltevorrichtung (6) eine Saugeinrichtung zum Erzeugen einer Saugkraft auf die Stapelunterseite enthält.

10. Vorrichtung nach einem der Ansprüche 6 bis 9, **dadurch gekennzeichnet, dass** die Förderfläche im Drehbereich von zwei sich parallel erstreckenden und getrennt vorwärts und rückwärts steuerbaren Förderstrecken (3, 4) gebildet wird.

## Claims

1. Method for rotating a stack (2) resting on a conveying surface about an axis perpendicular to the conveying plane, a restraining force acting counter to the conveying direction (5) being caused to act against the underside of the stack (2) on a longitudinal side and in the front area in the conveying direction, effecting a rotational movement as the stack (2) is transported onward and, during the action of the restraining force, the stack (2) being lifted on the longitudinal side on which the restraining force also acts, **characterized in that** an angular position is measured by means of an angle measuring device during the rotational movement of the stack (2).

2. Method according to Claim 1, **characterized in that** suction is applied to the underside of the stack at the restraining point.

3. Method according to one of Claims 1 to 2, **characterized in that** the lifting of the stack (2) on the longitudinal side is carried out by means of transverse rollers (7), which are mounted with axis of rotation extending in the conveying direction (5) such that they can be rotated freely and raised and lowered.

4. Method according to one of Claims 1 to 3, **characterized in that** in the rotational area, the conveying device (1) has two conveying sections (3, 4) extending in parallel in the conveying direction and separately controllable forwards and rearwards, in order to influence the rotation.

5. Method according to one of Claims 1 to 4, **characterized in that** at the point of rotation (8), the rotational angle of the stack (2) is measured contiguously.

6. Apparatus for carrying out a method according to one of Claims 1 to 5, having a conveying device (1) which has a conveying surface on which the stack (2) rests during transport, a restraining apparatus (6) that can be moved against the underside of the stack (2) being arranged on a longitudinal side, effecting a rotational movement during onward transport of the stack (2) in the active position, and a lifting apparatus for lifting the stack (2) on its longitudinal side being arranged on the longitudinal side with the restraining apparatus (6), before the latter in the transport direction, **characterized in that** an angle measuring device is provided in order to measure an angular position during the rotational movement of the stack (2).

7. Apparatus according to Claim 6, **characterized in that** the lifting apparatus contains at least one transverse roller (7), which is mounted with axis of rotation extending in the conveying direction (5) such that it can be rotated freely and raised and lowered.

8. Apparatus according to one of Claims 6 to 7, **characterized in that** the restraining apparatus (6) contains a turntable mounted such that it can be raised and lowered.

9. Apparatus according to one of Claims 6 to 8, **characterized in that** the restraining apparatus (6) contains a suction device for producing a suction force on the underside of the stack.

10. Apparatus according to one of Claims 6 to 9, **characterized in that** the conveying surface in the rotational area is formed by two conveying sections (3, 4) extending in parallel and separately controllable forwards and rearwards.

## Revendications

1. Procédé pour faire pivoter une pile (2) déposée sur une face de transport autour d'un axe perpendiculaire au plan de transport, dans lequel on fait agir ponctuellement sur un côté longitudinal et dans la région avant dans la direction de transport, contre le côté inférieur de la pile (2), une force de retenue agissant à l'encontre de la direction de transport (5), qui provoque un mouvement de pivotement lors d'un transport ultérieur de la pile (2), et pendant l'action de la force de retenue on soulève la pile (2) sur le côté longitudinal où agit également la force de retenue, **caractérisé en ce que** l'on mesure une position angulaire pendant le mouvement de pivotement de la pile (2) au moyen d'un dispositif de mesure d'angle.

2. Procédé selon la revendication 1, **caractérisé en ce que** l'on aspire le côté inférieur de la pile au point de retenue.

3. Procédé selon une des revendications 1 à 2, **caractérisé en ce que** l'on effectue le soulèvement de la pile (2) sur le côté longitudinal au moyen de rouleaux transversaux (7), qui sont montés de façon librement rotative avec un axe de rotation s'étendant dans la direction de transport (5) et de façon relevable et abaissable.

4. Procédé selon l'une quelconque des revendications 1 à 3, **caractérisé en ce que** le dispositif de transport (1) présente dans la région de pivotement deux sections de transport (3, 4) s'étendant parallèlement dans la direction de transport et pouvant être commandées séparément vers l'avant et vers l'arrière, afin d'influencer le pivotement.

5. Procédé selon l'une quelconque des revendications 1 à 4, **caractérisé en ce que** l'on mesure en continu l'angle de pivotement de la pile (2) au centre de pivotement (8).

6. Dispositif pour la mise en oeuvre d'un procédé selon l'une quelconque des revendications 1 à 5 avec un dispositif de transport (1), qui présente une face de transport, sur laquelle la pile (2) est déposée pendant le transport, dans lequel un dispositif de retenue mobile (6) est disposé sur un côté longitudinal contre le côté inférieur de la pile (2), qui en position active provoque un mouvement de pivotement lors d'un transport ultérieur de la pile (2), et en ce qu'un dispositif de levage est disposé sur le côté longitudinal muni du dispositif de retenue (6), avant ce dernier dans la direction de transport, afin de soulever la pile (2) sur son côté longitudinal, **caractérisé en ce qu'**il est prévu un dispositif de mesure d'angle, afin de détecter une position angulaire pendant le mouvement de pivotement de la pile (2).

7. Dispositif selon la revendication 6, **caractérisé en ce que** le dispositif de levage comprend au moins un rouleau transversal (7), qui est monté de façon librement rotative avec un axe de rotation s'étendant dans la direction de transport (5) et de façon relevable et abaissable.

8. Dispositif selon une des revendications 6 à 7, **caractérisé en ce que** le dispositif de retenue (6) comprend un plateau pivotant monté de façon relevable et abaissable.

9. Dispositif selon l'une quelconque des revendications 6 à 8, **caractérisé en ce que** le dispositif de retenue (6) comprend un dispositif d'aspiration pour produire une force d'aspiration sur le côté inférieur de la pile.

10. Dispositif selon l'une quelconque des revendications 6 à 9, **caractérisé en ce que** la face de transport est formée dans la région de pivotement par deux sections de transport (3, 4) s'étendant parallèlement et pouvant être commandées séparément vers l'avant et vers l'arrière.
